Europäisches Patentamt

European Patent Office

Office européen des brevets

(19)

(11) Numéro de publication : **0 060 156**
**B1**

(12) **FASCICULE DE BREVET EUROPÉEN**

(45) Date de publication du fascicule du brevet :
**15.05.85**

(51) Int. Cl.⁴ : $G\ 01\ P\ 1/02$

(21) Numéro de dépôt : **82400219.0**

(22) Date de dépôt : **08.02.82**

(54) **Compteur pour véhicule à deux roues, ou analogue.**

(30) Priorité : **09.03.81 FR 8104657**

(43) Date de publication de la demande :
**15.09.82 Bulletin 82/37**

(45) Mention de la délivrance du brevet :
**15.05.85 Bulletin 85/20**

(84) Etats contractants désignés :
**BE DE GB IT LU NL**

(56) Documents cités :
**DE-A- 2 233 926**
**FR-A- 2 428 820**
**FR-A- 2 431 703**
**GB-A-   885 631**
**GB-A- 1 007 990**
**US-A- 2 073 152**
**US-A- 3 901 436**

(73) Titulaire : **HURET ET SES FILS Société dite:**
**60 Avenue Félix Faure**
**F-92000 Nanterre (FR)**

(72) Inventeur : **Huret, Roger**
**Décédé (FR)**

(74) Mandataire : **Moncheny, Michel et al**
**c/o Cabinet Lavoix 2 Place d'Estienne d'Orves**
**F-75441 Paris Cedex 09 (FR)**

Jouve, 18, rue St-Denis, 75001 Paris, France

**Description**

Les compteurs habituellement utilisés sur les véhicules à deux roues ou analogues, et notamment les compteurs kilométriques avec indicateur de vitesse, comportent généralement un boîtier cylindrique à l'intérieur duquel sont montés plusieurs sous-ensembles et sur lequel est fixé un cadran. L'assemblage de ces compteurs suppose donc un nombre de manipulations important puisqu'il est nécessaire d'abord de fixer les différents organes des sous-ensembles les uns sur les autres, puis d'introduire chacun des ensembles dans le boitier et de le fixer sur celui-ci avant de fixer le cadran. Il s'ensuit que le montage de tels compteurs est une opération décliate et que son coût est relativement élevé. De tels compteurs sont décrits, par exemple, dans les documents FR-A-2428820 et GB-A-885631.

La présente invention a pour but de remédier à ces inconvénients en facilitant à la fois le montage et la fabrication d'un compteur de ce type.

Cette invention a pour objet un compteur pour véhicule à deux roues, ou analogue, comportant un boîtier cylindrique moulé, dont une face extrême fermée est prolongée extérieurement par une entrée de câble de commande munie de moyens de fixation audit véhicule, caractérisé en ce que la surface interne du boîtier comporte des nervures longitudinales de renforcement formant à leur extrémité supérieure, des surfaces d'appui pour ladite platine ; au moins deux rainures longitudinales ; et une platine de support du mécanisme comportant une plaque de fermeture du boîtier, percée d'un trou central et d'au moins une fenêtre, et munie de deux ailes latérales pendantes s'emboîtant exactement dans le boitier et percées de trous de fixation entre elles des axes des organes de comptage, ainsi que d'une cloison radiale portant deux paliers respectivement supérieur et inférieur et coaxiaux à la plaque et espacés entre eux.

Le boîtier ainsi réalisé peut recevoir une partie des organes constituant le mécanisme du compteur, par exemple l'axe de support de l'aimant d'un tachymètre magnétique, tandis que la platine porte la totalité des autres organes du compteur. L'assemblage de la platine dans le boîtier s'effectue par simple coulissement de ces deux organes qui s'emboîtent étroitement l'un dans l'autre, c'est-à-dire en une seule manœuvre facile à automatiser.

Selon un mode de réalisation préféré, le boîtier comporte deux demi-paliers de support de l'axe horizontal d'un organe de transmission du mouvement, l'un ménagé sur son fond au voisinage de l'entrée du câble, et l'autre sur sa paroi interne latérale, ainsi qu'un palier de support de l'axe vertical d'un second organe de transmission en prise avec le premier, formé sur son fond, la platine comportant un palier de réception de l'extrémité opposée de ce même organe vertical.

Le réglage de la position des différents organes est ainsi obtenu par le simple emboîtement de la platine dans le boîtier, tandis que la forme de cette platine et la présence de rainures de dégagement dans la paroi du boîtier permettent de donner à l'ensemble un encombrement minimal.

La description ci-dessous d'un mode de réalisation donné à titre d'exemple non limitatif, et représenté aux dessins annexés, fera d'ailleurs ressortir les avantages et caractéristiques de l'invention.

Sur les dessins :

la figure 1 est une vue en coupe axiale d'un compteur de kilomètres avec indicateur de vitesse, selon l'invention ;

la figure 2 est une vue en coupe suivant la ligne 2-2 de la figure 1 ;

la figure 3 est une vue en coupe horizontale suivant la ligne 3-3 de la figure 2 ;

la figure 4 est une vue en perspective de la platine de support du mécanisme dans le boîtier.

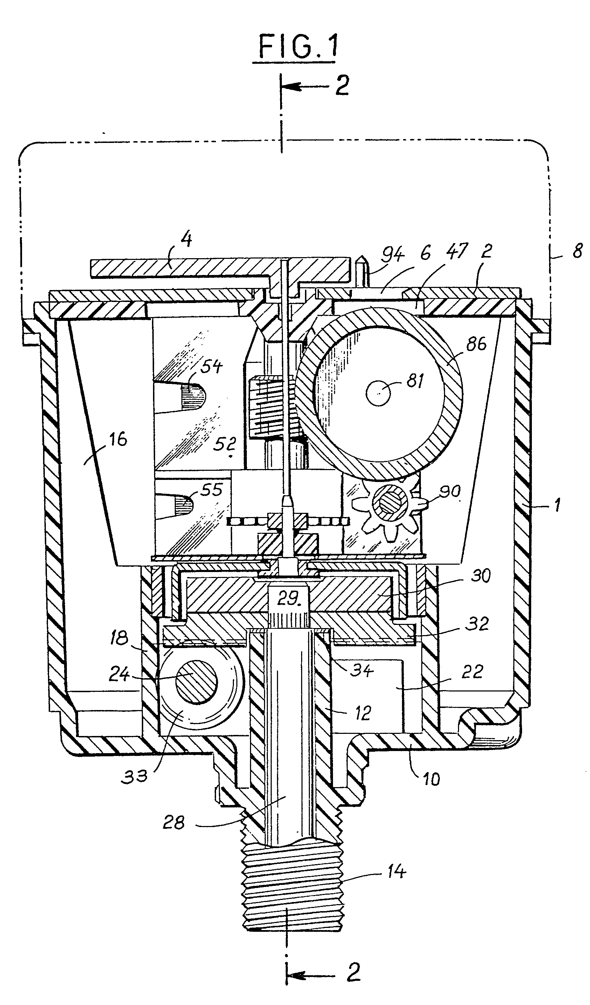

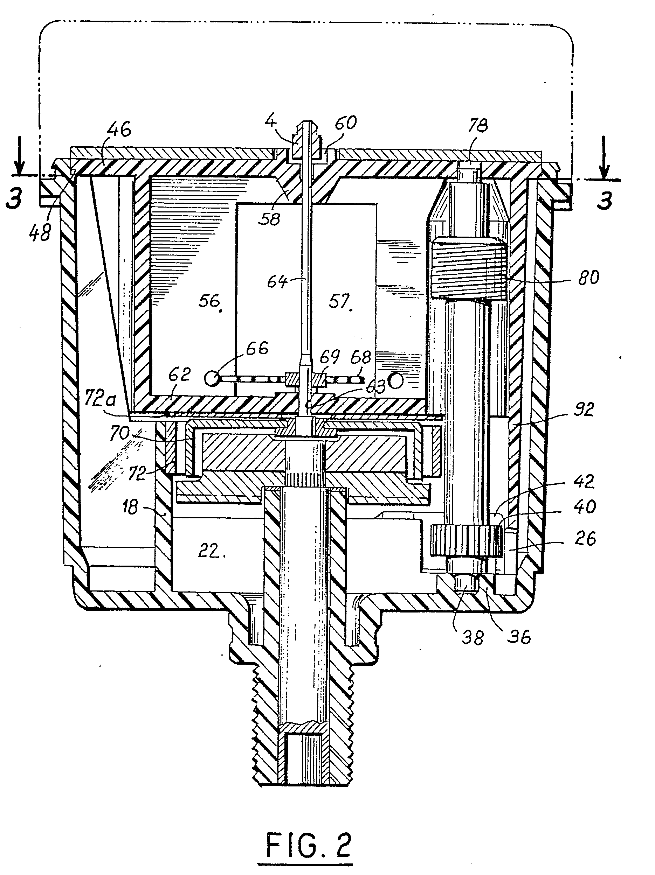

Le compteur kilométrique et indicateur de vitesse représenté sur les dessins comporte, de la manière habituelle, un boîtier 1 de forme sensiblement cylindrique, qui porte un cadran 2 sur lequel se déplace une aiguille 4 indicatrice de vitesse et qui est percé d'une lumière 6 de lecture du totalisateur de kilomètres. Une lunette 8, indiquée simplement par un trait interrompu sur les figures 1 et 2, est fixée sur le boîtier 1 de façon à protéger le cadran 2 et l'aiguille 4.

Comme le montrent plus particulièrement les figures 1 et 2, le boîtier 1 comporte à son extrémité opposée au cadran 2 un fond 10 qui est traversé par un organe tubulaire 12 qui fait saillie à la fois à l'intérieur et à l'extérieur du boîtier et délimite ainsi une entrée pour le câble de commande du compteur. L'organe tubulaire 12 est d'une seule pièce avec le fond 10 et le corps 1 du boîtier, et forme à l'extérieur de celui-ci un embout 14 de fixation muni d'un filetage et/ou d'autres moyens de montage du compteur.

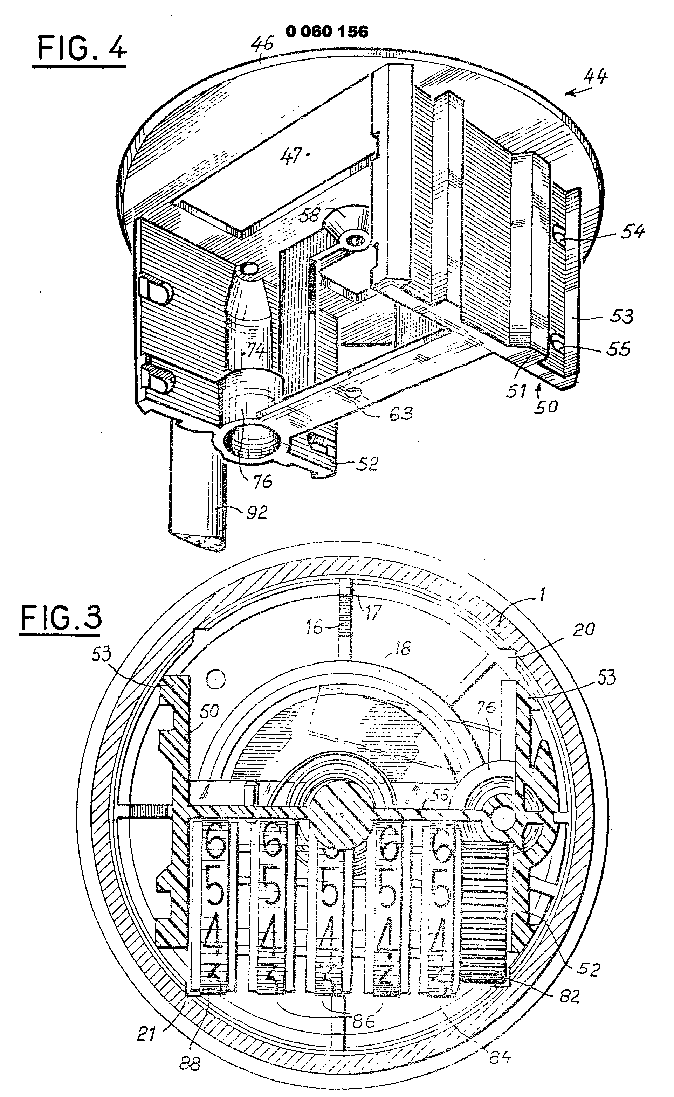

A l'intérieur du boîtier des nervures radiales 16 relient la surface interne de la paroi cylindrique à une douille annulaire 18, qui est coaxiale à la fois au tube 12 et au boîtier 1. Les nervures 16 ont une dimension radiale qui se réduit progressivement, entre le sommet de la douille 18 et la partie supérieure du boîtier 1, mais se terminent à une légère distance en-dessous du bord extrême de ce boîtier par une surface plane 17 (fig. 3).

Par ailleurs la surface interne du boîtier 1 comporte au moins deux rainures longitudinales 20, 21, qui s'étendent sur une partie de sa hauteur et sont de préférence situées de part et d'autre d'une nervure 16. Dans le mode de réalisation représenté sur les dessins, les nervures 16 sont au nombre de quatre et les rainures 20, 21 sont également au nombre de quatre, chaque rainure étant placée dans l'espace entre deux nervures. En outre les rainures 20 et 21 ont de préférence une section droite horizontale de forme triangulaire. La douille 18 est également reliée à l'organe tubulaire 12 par des nervures radiales de renforcement 22, dont l'une comporte une encoche en U ouverte à l'extérieur, qui constitue un demi-palier de support de l'extrémité d'un axe 24 d'organe de transmission. Un second demi-palier 26 est formé sur la surface interne du boîtier 1 (fig. 2) pour recevoir l'extrémité opposée de l'axe horizontal 24, la douille 18 étant interrompue localement pour permettre le passage de l'organe de transmission.

L'organe de transmission porté par l'axe 24 est entraîné à partir d'une tige 28 reliée au câble de transmission et enfilée dans le tube 12. Cette tige 28 est solidaire d'un axe 29 portant un disque aimanté 30 solidaire d'une roue 32 portant à sa partie inférieure une denture en spirale qui vient en prise avec un pignon 33 porté par l'axe de commande 24. Une bague 34 interposée entre l'extrémité du tube 12 et un évidement central de la roue 32 forme butée de support et facilite ainsi la rotation du disque 30 et de la roue 32 par rapport au tube 12.

Le fond 10 du boîtier 1 comporte par ailleurs un palier 36 de support d'un axe vertical 38 solidaire d'un pignon 40, qui reçoit son mouvement de l'axe 24 par l'intermédiaire d'une vis sans fin 42 portée par cet arbre. Le palier 36, comme les deux demi-paliers de support de l'axe 24, sont venus de moulage avec le boîtier 1 et la douille 18.

Dans le boîtier 1 est emboîtée une platine 44 qui comporte, comme le montre plus particulièrement la figure 4, une plaque circulaire 46 venant s'appuyer sur les surfaces d'appui 17 des nervures 16 du boîtier, ainsi que sur un épaulement interne 48 de ce boîtier (fig. 2). Sous cette plaque 46 pendent deux ailes, respectivement 50 et 52, ayant une face interne sensiblement plane et une face externe munie de nervures de renforcement 51 et de rebords 53 en surépaisseur dont la surface externe a un profil qui correspond à celui de la surface interne du boîtier contre laquelle il vient s'appliquer lorsque la platine 44 est en place dans le boîtier, comme le montre la figure 3. Chacune des ailes 50 et 52 comporte en outre, au voisinage de chaque rebord 53 deux trous espacés, respectivement 54 et 55, en regard sur les deux ailes, qui permettent le montage des axes de support des organes de comptage.

Dans le mode de réalisation préféré représenté sur les dessins, les deux ailes 50 et 52 sont sensiblement symétriques par rapport à un plan diamétral de la platine 44 et comportent chacune deux paires de trous 54, 55, tandis que la plaque 46 comporte deux lumières 47 de part et d'autre du plan de symétrie des ailes 50 et 52.

De l'aile 50 part une cloison radiale 56 solidaire de la plaque 46, qui se prolonge au-delà du centre de cette plaque 46 mais est évidée dans sa partie centrale en 57 (fig. 2). La cloison 56 porte à sa partie supérieure un palier tronconique 58 traversé par un passage axial qui communique avec un trou 60 de la plaque 46. Une barre 62 renforce le bord inférieur de la cloison 56 et comporte un palier 63 coaxial au palier 58 et servant, comme lui, au guidage de l'axe 64 de l'aiguille 4 de l'indicateur de vitesse. Un ergot 66 fixé dans la plaque 56 permet le montage de l'une des extrémités d'un ressort spiral de rappel 68, dont l'autre extrémité est rendue solidaire de l'axe 64 par l'intermédiaire d'une bague 69. L'axe 64 est par ailleurs solidaire d'une cloche 70 qui est fixée à son extrémité opposée à l'aiguille 4 et dont les bords viennent s'interposer entre le disque aimanté 30 et la douille 18, ou plus exactement entre ce disque aimanté et un anneau métallique 72 de fermeture de champ fixé à l'intérieur de cette douille 18. Une plaque 72a de fermeture du champ est fixée sous la barre 62 en regard de la cloche 70. Des entrefers sont toutefois ménagés à la fois entre le disque et la cloche et entre cette dernière et l'anneau 72, de façon à assurer un déplacement angulaire de la cloche et, par suite, de l'aiguille 4 lors de la rotation de l'aimant entraîné par le câble de commande.

L'aile 52 comporte dans sa partie médiane un logement délimité par une paroi sensiblement en forme de portion de cylindre, 74, ouvert en regard de l'aile 51, tandis que la cloison 56 est interrompue de façon à ménager un espace libre entre elle et la paroi 74. Toutefois à la partie inférieure de cette cloison 56, c'est-à-dire au voisinage de la barre 63, la cloison 56 est reliée à l'aile 52 par deux portions d'anneau 76 de même rayon que le cylindre 74. Lorsque la platine 44 est emboîtée dans le boîtier 1 la bague 76 ainsi formée est coaxiale au palier 36 et est traversée par l'axe 38 dont l'extrémité supérieure est maintenue dans un palier 78 formé dans la plaque 46 et porte une vis sans fin 80.

La vis sans fin 80 montée sur l'axe 38 permet alors de transmettre le mouvement de rotation du câble de commande aux roues de comptage montées entre les ailes 50 et 52. En effet, la vis sans fin 80 est en prise avec une roue dentée 82 montée rotative sur un axe 81 fixée dans les deux trous 54 en regard des ailes 50 et 52. La roue de commande 82 est solidaire d'une première roue chiffrée 84, mais plusieurs autres roues chiffrées, quatre dans le mode de réalisation représenté, sont également montées rotatives sur l'axe de support de la roue 82. La roue chiffrée 84, de même que les trois premières roues 86, comportent un toc d'entraînement de la roue suivante. Par contre la dernière roue chiffrée 88 ne comporte pas de toc de ce genre.

Au-dessous des roues chiffrées de comptage 82 à 88 un second axe traverse les trous 55 des deux ailes 50 et 52 et porte des étoiles 90 décalées latéralement par rapport aux roues chiffrées et venant en prise, d'une part avec le toc de l'une des roues, et d'autre part avec les dents de la roue chiffrée suivante, de sorte que chaque roue chiffrée 86, 88 avance d'un chiffre chaque fois que la roue précédente a effectué un tour complet.

La position relative des trous 55 et 54 et des lumières 47 est choisie de manière que l'axe 81 des roues chiffrées se trouve pratiquement au milieu de la lumière 47 et qu'ainsi les chiffres portés par les roues soient lisibles par cette lumière.

Comme les ailes 50 et 52 comportent deux séries de trous 55 et 54, symétriques par rapport à un plan diamétral de la plaque 46, et que de la même manière cette plaque 46 comporte deux lumières 47, l'ensemble des organes de comptage peut être monté dans deux positions différentes par rapport à ce plan de symétrie, sans que la position de l'axe 38 portant la vis 80 et le pignon 40 ait à être modifiée.

Quelle que soit la position choisie, le montage des organes du compteur consiste essentiellement en un empilage d'éléments dans le boîtier. En effet, l'ensemble formé par le disque aimanté 30, la roue 32 et la tige 28 est enfilé dans l'organe tubulaire 12 après la mise en place de l'axe 24 dans les paliers du fond du boîtier. La position de ces paliers par rapport à l'organe tubulaire 12 est telle que la roue 32 et le pignon 33 viennent automatiquement en prise lors de la mise en place de l'aimant 30. L'axe 38 est ensuite engagé dans le palier 36, en étant guidé par les parties 74, 76. Puis l'ensemble formé par la platine 44 portant l'axe 64 d'aiguille solidaire de la cloche 70, les roues de comptage 86, 88, ainsi que les étoiles 90, est introduit dans le boîtier 1 et enfoncé jusqu'à ce que la plaque 46 vienne en appui sur les surfaces supérieures 17 des nervures 16. Le palier 78 vient coiffer l'axe 38 et l'emboîtement de cet ensemble est guidé par les bords renforcés 53 des ailes 50 et 52. Par ailleurs l'aile 52 est de préférence munie d'une patte de guidage 92, qui prolonge la paroi extérieure de l'anneau 76 et assure la mise en place précise de la vis sans fin 42.

Lorsque la platine 44 est en place dans le boîtier 1 le cadran 2 peut être monté sur lui, des ergots de centrage 94 facilitant ce montage, puis l'aiguille 4 est enfilée sur l'axe 64. La lunette 8 peut alors être elle-même assemblée.

La platine 44 comme le boîtier 1 est réalisée en matière plastique par moulage, de sorte que l'ensemble des ailes 50, 52 de la cloison 56 et de la plaque 46 est d'une seule pièce. Par ailleurs la disposition particulière des ailes 50 et 52 permet de monter l'ensemble des organes de comptage et d'indication de vitesse très près les uns des autres sans perte de place, la platine 44 occupant d'ailleurs la quasi-totalité du volume interne du boîtier 1.

Les rainures 20 et 21 contribuent également à la réduction de l'encombrement du boîtier. En effet, elles constituent des dégagements permettant de loger le bord des roues, telles que la roue dentée de commande 82 et la roue chiffrées extrême 88, ainsi que le montre la figure 3.

L'invention permet donc de disposer d'un compteur de faible encombrement et de faible poids, qui peut être assemblé par des manœuvres simples susceptibles d'être effectuées de manière automatique, ce qui permet facilement une production en grande série à un coût relativement faible.

En ce qui concerne la présence de deux lumières 47 dans la platine 44, elle permet d'utiliser le même boîtier pour réaliser des compteurs d'aspects et de caractéristiques différents ; on prévoit :

— soit, comme représenté, un totalisateur unique à la partie supérieure du cadran ;

— soit un totalisateur à la partie inférieure du cadran ;

— soit deux totalisateurs, dont un avec remise à zéro pour la mesure de parcours partiels.

**Revendications**

1. Compteur pour véhicule à deux roues, ou analogue, comportant un boîtier cylindrique moulé (1), dont une face extrême fermée (10) est prolongée extérieurement par une entrée de câble de commande (12) munie de moyens de fixation (14) audit véhicule et une platine (44) de support de mécanisme caractérisé en ce que la surface interne du boîtier (1) comporte des nervures longitudinales de renforcement (16) formant, à leur extrémité supérieure (17), des surfaces d'appui pour ladite platine (44) ; au moins deux rainures longitudinales (20, 21) ; et en ce que la platine (44) de support du mécanisme comporte une plaque (46) de fermeture du boîtier (1), percée d'un trou central (60) et d'au moins une lumière (47), d'où pendent deux ailes latérales (50, 52) s'emboîtant exactement dans le boîtier (1) et percées de trous (54, 55) de fixation entre elles d'axes d'organes de comptage (82 à 90) et une cloison radiale (56) portant deux paliers (58, 63) respectivement supérieur et inférieur, coaxiaux à la plaque (46) de fermeture et espacés entre eux.

2. Compteur suivant la revendication 1, caractérisé en ce que le fond du boîtier (1) comporte deux demi-paliers (26) de support de l'axe horizontal (24) d'un organe de transmission de mouvement, le premier demi-palier étant formé sur la surface latérale du boîtier et le deuxième au voisinage de l'entrée du câble de commande, et un palier (36) recevant un axe vertical (38), au voisinage du premier demi-palier.

3. Compteur suivant l'une des revendications 1 et 2, caractérisé en ce que le boîtier (1) comporte une douille interne (18) coaxiale au boîtier (1) et reliée à celui-ci par les nervures radiales (16).

4. Compteur suivant l'une des revendications 1 à 3, caractérisé en ce que les deux ailes latérales (50, 52) de la platine (44) sont sensiblement symétriques par rapport à leur plan médian et comportent des bords renforcés (53) dont le profil extérieur épouse celui du boîtier (1).

5. Compteur suivant l'une des revendications 1 à 4, caractérisé en ce que la cloison radiale (56) de la platine est perpendiculaire aux deux ailes (50, 52), part de l'une d'elles (50) et se prolonge au-delà du centre de la plaque (46) de fermeture mais est évidée (en 57) dans sa partie centrale.

6. Compteur suivant l'une des revendications 1 à 5, caractérisé en ce que la partie médiane de l'une des ailes (52) est incurvée en portion de cylindre (74) et est reliée à la cloison (56) à sa partie inférieure par deux portions d'anneau (76).

7. Compteur suivant la revendication 6, caractérisé en ce que la plaque (46) de la platine comporte un palier (78) coaxial à la portion cylindrique (74) de l'aile (52) et, après l'assemblage, au palier (36) recevant l'axe vertical (38) et situé au fond du boîtier.

8. Compteur suivant l'une des revendications 1 à 7, caractérisé en ce que la platine (44) comporte une patte de guidage (92) solidaire de l'une des ailes (52) qui fait saillie au-delà de cette aile et se prolonge jusqu'au voisinage des deux demi-paliers (26) et du palier (36) recevant l'axe vertical (38) et situé au fond du boîtier (1).

9. Compteur suivant l'une des revendications 1 à 8, caractérisé en ce que la partie inférieure de la cloison radiale (56) est renforcée par une barre transversale (62) qui porte le palier inférieur (63), tandis que la cloison radiale (56) elle-même supporte un ergot (66) de fixation de l'extrémité d'un ressort spiral (68) de rappel de l'axe (64) de l'aiguille (4) indicatrice de vitesse, supporté par les deux paliers coaxiaux (58, 63).

10. Compteur suivant l'une des revendications 2 à 9, caractérisé en ce qu'il comporte un tachymètre magnétique comprenant un disque aimanté (30) et une vis d'entraînement (32) solidaire d'une tige (28) de raccordement au câble de commande, qui est enfilé dans l'entrée de câble solidaire du boîtier (1), ainsi qu'une cloche (70) fixée à l'axe porte-aiguille (64) traversant les deux paliers coaxiaux (58, 63) de la cloison radiale (56), et d'autre part un totalisateur de kilomètres comportant des roues (84, 86, 88) de comptage montées entre les deux ailes (50, 52) de la platine (1) et entraînées par l'intermédiaire des organes de transmission portés par l'axe vertical (38) monté dans le palier (36) du fond du boîtier et dans le palier supérieur (58) de la platine (44), et en prise avec les organes de transmission de l'axe horizontal (24) du fond du boîtier qui reçoit son mouvement de la vis d'entraînement (32).

**Claims**

1. A recorder for a two-wheeled vehicle, or the like, comprising a moulded cylindrical case (1) having a closed end wall (10) which is externally extended by a driving cable entrance (12) provided with fixing means (14) to said vehicle, and a mechanism support plate (44), characterised in that the inner surface of the case (1) includes longitudinal reinforcing ribs (16) defining, at their upper ends (17), support surfaces for said plate (44) ; at least two longitudinal grooves (20, 21) ; and the mechanism support plate (44) comprises a sheet (46) closing the case (1) and provided with a central aperture (60) and at least one opening (47), and two lateral flanges (50, 52) depend from said sheet and fit exactly in the case (1) and are provided with apertures (54, 55) for mounting between the flanges shafts of counting means (82 to 90), and a radial partition wall (56) carrying two respectively upper and lower bearings (58, 63) which are coaxial with said closing sheet (46) and are spaced apart.

2. A recorder according to claim 1, characterised in that the bottom of the case (1) comprises two half-bearings (26) for supporting a horizontal shaft (24) of a motion transmitting means, the first half-bearing being formed on the lateral surface of the case and the second half-bearing being in the vicinity of the driving cable entrance, and a bearing (36) receiving a vertical shaft (38) in the vicinity of the first half-bearing.

3. A recorder according to claim 1 or 2, characterised in that the case (1) comprises an inner sleeve (18) which is coaxial with the case (1) and connected to the case by radial ribs (16).

4. A recorder according to claim 1, 2 or 3, characterised in that the two lateral flanges (50, 52) of the plate (44) are substantially symmetrical with respect to their median plane and comprise reinforced edge portions (53) whose outer contour fits the contour of the case (1).

5. A recorder according to any one of the claims 1 to 4, characterised in that the radial partition wall (56) of the plate is perpendicular to the two flanges (50, 52) and extends from one (50) of the flanges beyond the centre of the closing plate (46) but is apertured (at 57) in its centre part.

6. A recorder according to any one of the claims 1 to 5, characterised in that the middle portion of one of the flanges (52) is curved into the shape of a portion of a cylinder (74) and is connected to the partition wall (56) in its lower part by two portions of a ring (76).

7. A recorder according to claim 6, characterised in that the sheet (46) of the plate comprises a bearing (78) which is coaxial with the cylindrical portion (74) of the flange (52) and, after assembly, coaxial with the bearing (36) receiving the vertical axis (38) and located at the end of the case.

8. A recorder according to any one of the claims 1 to 7, characterised in that the plate (44) comprises a guiding tab (92) rigid with one of the flanges (52) and projecting beyond this flange to the vicinity of the two half-bearings (26) and of the bearing receiving the vertical shaft (38) and located at the end of the case.

9. A recorder according to any one of the claims 1 to 8, characterised in that the lower part of the radial partition wall (56) is reinforced by a transverse bar (62) which carries the lower bearing (63), while the radial partition wall (56) is reinforced by a transverse bar (62) which carries the lower bearing (63), and the radial partition wall (56) supports itself a pin (66) for fixing the end of a spiral return spring (68) for returning a shaft (64) of a speedometer needle (4) supported by the two coaxial bearings (56, 63).

10. A recorder according to any one of the claims 2 to 9, characterised in that it comprises a magnetic tachometer including a magnetized disc (30) and a driving spiral gear (32) rigid with a rod (28) connected to the driving cable which is mounted in the cable entrance rigid with the case (1), and a cup (70) fixed to the needle-carrying shaft (64) which extends through two coaxial bearings (58, 63) of the radial partition wall (56), and a kilometer counter comprising counting wheels (84, 86, 88) mounted between the two flanges (50, 52) of the plate (1) and driven through transmission means carried by the vertical shaft (38) mounted in the bearing (36) of the end of the case and in the upper bearing (58) of the plate (44), and engaged with the transmission means of the horizontal shaft (24) of the end of the case which receives its motion from the driving spiral gear (32).

## Patentansprüche

1. Kilometerzähler für zweirädrige Fahrzeuge oder dergleichen, umfassend ein zylindrisches, gegossenes Gehäuse (1), dessen eine geschlossene Stirnseite (10) nach außen in einen mit Mitteln (14) zum Befestigen des Gehäuses am Fahrzeug versehenen Einlaßstutzen für die Antriebswelle (12) übergeht, sowie umfassend eine Aufnahmeplatine für den Zählmechanismus, dadurch gekennzeichnet, daß die Innenseite des Gehäuses (1) mit längsverlaufenden Verstärkungsrippen (16) versehen ist, deren obere Enden (17) Stützflächen für die Auflage der Aufnahmeplatine (44) bilden, sowie mit wenigstens zwei längsverlaufenden Nuten (20, 21), daß die Aufnahmeplatine (44) für den Zählmechanismus eine das Gehäuse (1) verschließende Abschlußplatte (46) umfaßt, welche eine zentrale Durchbrechung (60) und wenigstens ein Sichtfenster (47) aufweist und von der aus zwei laterale Stege (50, 52) abstehen, die sich exakt in das Gehäuse (1) einfügen und die mit Durchbrechungen (54, 55) für zwischen den Stegen sich erstreckende Achsen der Zählorgane (82 bis 90) versehen sind, und daß die Aufnahmeplatine (44) ein sich radial erstreckendes Wandteil (56) umfaßt, welches ein oberes Lager (58) und ein unteres Lager (63) trägt, die jeweils koaxial zur Abschlußplatte (46) und mit gegenseitigem Abstand angeordnet sind.

2. Kilometerzähler nach Anspruch 1, dadurch gekennzeichnet, daß der Boden des Gehäuses (1) zwei Lagerhälften (26) für die Lagerung der horizontalen Achse (24) eines Organs zur Bewegungsübertragung aufweist, wobei die erste Lagerhälfte an der Seitenwand des Gehäuses (1) und die zweite Lagerhälfte im Bereich des Einlaßstutzens für die Antriebswelle angeordnet sind, und daß das Gehäuse (1) im Bereich der ersten Lagerhälfte ein Lager (36) zur Aufnahme einer vertikalen Achse aufweist.

3. Kilometerzähler nach einem der Ansprüche 1 oder 2, dadurch gekennzeichnet, daß das Gehäuse (1) eine nach innen stehende Hülse (18) bildet, welche koaxial zum Gehäuse (1) ausgerichtet und über radiale Rippen (16) mit diesem verbunden ist.

4. Kilometerzähler nach einem der Ansprüche 1 bis 3, dadurch gekennzeichnet, daß die beiden lateralen Stege (50, 52) der Aufnahmeplatine (44) im wesentlichen symmetrisch zu ihrer Mittelebene sind und mit Randverstärkungen (53) versehen sind, deren Außenprofil sich an die Innenkontur des Gehäuses (1) anschmiegt.

5. Kilometerzähler nach einem der Ansprüche 1 bis 4, dadurch gekennzeichnet, daß das radial sich erstreckende Wandteil (56) der Platine (44) senkrecht zu den Stegen (50, 52) steht, daß es Teil eines (50) der Stege ist, sich über die Mitte der Abschlußplatte (46) hinaus erstreckt und daß das Wandteil (56) in seinem mittleren Bereich eine Ausnehmung (57) aufweist.

6. Kilometerzähler nach einem der Ansprüche 1 bis 5, dadurch gekennzeichnet, daß der mittlere Bereich eines (52) der Stege eine Ausnehmung von der Form eines zylinderabschnittes (74) aufweist und mit dem Wandteil (56) in dessen unterem Bereich durch zwei Ringabschnitte (76) verbunden ist.

7. Kilometerzähler nach Anspruch 6, dadurch gekennzeichnet, daß die Abschlußplatte (46) der Platine ein Lager (78) aufweist, welches koaxial zum Zylinderabschnitt (74) des Steges (52) und nach dem Zusammenbau — zu dem die vertikale Achse (38) aufnehmenden, am Boden des Gehäuses angeordneten Lager (36) ist.

8. Kilometerzähler nach einem der Ansprüche 1 bis 7, dadurch gekennzeichnet, daß die Platine (44) einen Führungsfinger (92) aufweist, welcher mit einem (52) der Stege fest verbunden ist, über diesen Steg hinaus vorspringt und bis in den Bereich der beiden Lagerhälften (26) und des am Boden des Gehäuses (1) angeordneten Lagers (36) zur Aufnahme der vertikalen Achse (38) verlängert ist.

9. Kilometerzähler nach einem der Ansprüche 1 bis 8, dadurch gekennzeichnet, daß der untere Bereich des radialen Wandteils (56) durch einen transversalen Steg (62) verstärkt ist, welcher das untere Lager (63) trägt, während das radiale Wandteil (56) selbst einen Vorsprung (66) zur Befestigung eines Endes einer Spiralfeder (68) für die Rückstellung der Achse (64) eines Geschwindigkeitsanzeigers (4) aufweist, die von den beiden koaxialen Lagern (56, 63) gehalten wird.

10. Kilometerzähler nach einem der Ansprüche 2 bis 9, dadurch gekennzeichnet, daß dieser ein Magnet-Tachometer mit einer magnetischen Platte (30) und einer Antriebsschnecke (32) umfaßt, welche mit einer an die Antriebswelle angeschlossenen Achse (28) in Verbindung steht, wobei die Antriebswelle durch den mit dem Gehäuse (1) einstückigen Einlaßstutzen eingeführt ist, daß er eine Glocke (70) umfaßt, die an der den Zeiger tragenden Achse (64) angeordnet ist, die durch die beiden Koaxialen Lager (58, 63) des radialen Wandteils (56) sich erstreckt, daß er einen Kilometerzähler (Totalisator) mit zwischen den beiden Stegen (50, 52) der Aufnahmeplatine (44) angeordneten Zählrädern (84, 86, 88) umfaßt, welche mittels der Übertragungsorgane angetrieben werden, die von der vertikalen Achse (38) gehalten werden, wobei diese Achse (38) in dem am Boden des Gehäuses angeordneten Lager (36) und in dem oberen Lager (78) der Platine (44) gelagert ist und mit den Übertragungsorganen der am Boden des Gehäuses befindlichen horizontalen Achse (24) in Eingriff steht, welche durch die Antriebsschnecke (32) angetrieben wird.

## FIG.1

FIG. 2

**FIG. 4**

**FIG.3**